# EUROPEAN PATENT SPECIFICATION

(11) **EP 2 366 913 B1**
(45) Date of publication and mention of the grant of the patent: **01.06.2016**
(21) Application number: 11156992.7
(22) Date of filing: 04.03.2011
(51) Int. Cl.: F16D 3/84

(54) **A protective embodiment at the sealing felts used in the drive shaft sliding sets**
Schützende Ausführungsform des Dichtungsfilzes in Antriebswellengleitsätzen
Exécution protectrice pour feutres de scellage utilisés dans des ensembles coulissants d'arbre de transmission

(30) Priority: 05.03.2010 TR 201001681
(43) Date of publication of application: 21.09.2011
(73) Proprietor: Tirsan Kardan Sanayi Ve Ticaret Anonim Sirketi, 45030 Manisa (TR)
(72) Inventor: Isik, Efe, 45030, Manisa (TR); Tasan, Korkut, 45030, Manisa (TR); Özgürler, Hüseyin, 45030, Manisa (TR)
(74) Representative: Dereligil, Ersin

(56) References cited:
- EP-A1- 1 441 137
- EP-A1- 1 460 286
- WO-A1-2010/086269

## Description

### THE RELATED ART

The invention relates to drive shafts providing motion, moment, and power transmission in motor vehicles.

The present invention relates to a protective embodiment, which would enhance the functionality of the sealing felts used inside the sliding sets providing axial motion in drive shafts, and which would extend their service lives and thus extend the expected life of the drive shaft.

### Background of the Invention

Transmission components; are generally used for producing power from a source and then transmission of this power from the source to the drive mechanism. For instance, in most of the presently used land vehicles, the coupled engine / transmission box produce cyclic power. This power is transmitted to the axle inlet from the engine / transmission box outlet in order to drive the wheels of the vehicle with the help of the drive shaft. While the front and rear joints found on the drive shaft provide transmission of cyclic power between the coupled motor / transmission box and the axle, they allow limited angular and axial movements.

In the drive shafts of the prior art, two lip felts used among the sliding set components are made of rubber material. During operation, the felt lips have a tendency to be worn due to the negative effects of the external environment conditions (snow, ice, mud, water, heat etc.)

Patent no WO 2005/017376 A1: discloses the felt design of the cross bearing used in industrial applications. The felt makes circular oscillation motion at the area it is used. Therefore, it shows difference in the application field. On the other hand, the felt of the invention does not have a protection metal sheet of itself (which is vulcanized, in other words bound to the felt). The felt of the patent is protected against the external factors due to the position it is placed (via labyrinth impact - mechanical sealing).

Patent no US 6050571: discloses in detail the felt designs of cross bearings used in the drive shafts. In this patent, the sealing component of the patent also makes circular oscillation motion. As it would also be seen from the figures found in the patent, sealing capability is tried to be increased with the dust holder positioned in front of the springed rotating shaft felts.

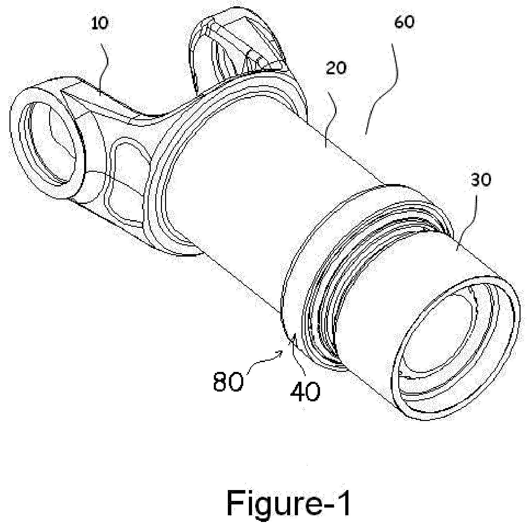

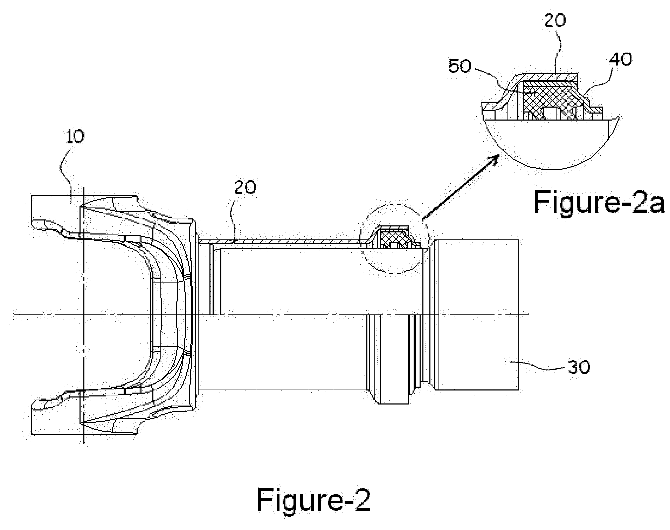

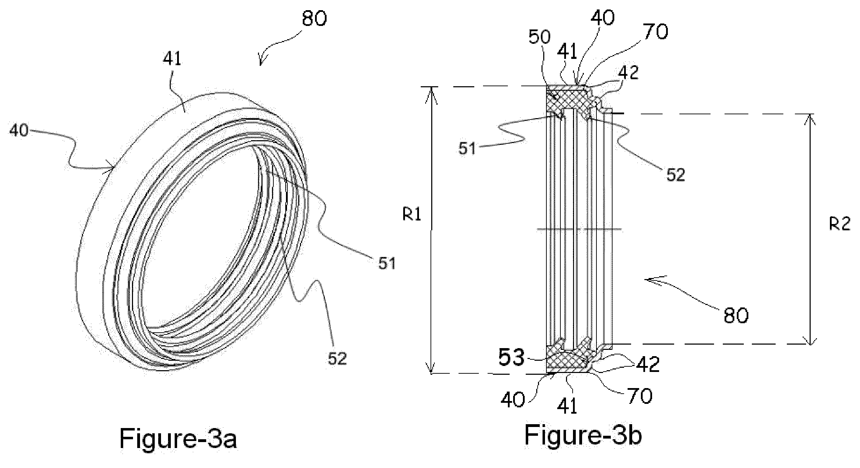

Patent no US 5597356: discloses in detail the felt designs of cross bearings used in the drive shafts. In this patent, the sealing component of the patent also makes circular oscillation motion. In the patent, in Figure 2, two-lip felt design is detailed and the sealing properties are tried to be increased by bending the terminal end, called as cross ferrule.

EP 0440 518 A1: The said felt in the patent is used on the sliding set adjusting the length alterations on the drive shaft. The felt operates by making reciprocating movement. The main differences between the felt, which is the subject of that patent, and one found in the present invention can be listed as follows:
Felt lip is taken out of the metal sheet and any component or metal sheet is not found to protect the felt lip from external factors. Felt lip is unprotected. The rubber felt and the metal sheet are separate from each other, or in other words, vulcanization (binding) operation is not made. The felt and metal sheet are attached on the part number 2 via the crushing number 20. The felt is fixed inside the metal sheet with the shape formed on the metal sheet. Although it is used with the same purpose and at the same place with the felt of our invention, the dust and sealing lips, which are the subjects of that invention, are completely open to external factors (snow, ice, mud, stone etc.). On the other hand, rubber and felt are not vulcanized.

Patent EP 1 441 137 A1 discloses a sealing device for a shaft. The seal is vulcanized to a protective metal sheet, but this protective metal sheet does not cover all the seal.

In the prior art, the felts used at the shaft connections of the drive shafts of the vehicles operating in cold climate, terrain, construction site etc. dirty and hard environmental conditions can become useless in a short time. When the felt does not operate straight, the drive shaft and its lower components, which have high maintenance and repair costs, can be damaged. Especially, since the functionality losses of the felt lips as a result of wearing and deformation occur faster in hard operating conditions, it comprises a significant problem for the service life of the drive shaft.

In the drive shafts of the prior art, protective felts are used between the surfaces where the sliding shaft and the sliding case contact and are connected to each other for accomplishing many functions (sealing, safety, prevention of dust, dirt entrance from outside). The felts used separates the operating environment of the sliding set from the external environment and thus has the task of preventing entrance of the dust coming from outside into the operation medium or prevention of the oil (if there is) found in the operating medium from getting out to external medium.

### Description of the Invention

The invention is used on the sliding set which adjusts the length alterations occurring due to suspension motions on the drive shaft. It is aimed to improve the operating conditions by eliminating the negative effects of external environment mostly on the two lip felt used among the drive shafts.

The most important feature of the invention is the presence of the protective metal sheet, which prevents damaging of the felt lips by wet/dry mud, snow, ice etc. substances formed on and/or around the drive shaft sliding set according to the conditions of usage or stone etc. materials bursting during operation. This metal sheet ensures late deformation of the felt lips and extension of the felt service life and thus the drive shaft service life. In this way, less maintenance is required for the drive shafts used in motor vehicles and thus user service costs are reduced.

Felt with protection, which is the subject of the invention, operates on plastic, has two lips, and makes reciprocating movement. In this way, it is designed in a way that it would scrape snow, ice, mud etc. materials during the reciprocating movement.

A purpose of the invention is to protect the dust lip of the felt from the negative effects of external factors (stone, mud, ice etc.) by a protective metal sheet, and prevention of damage on the felt by scraping of the substances (frozen mud, ice etc.) which became hardened and inflexible on the sliding set by this protective metal sheet.

In order to achieve the above said advantages which will be better understood from the below detailed description, the present invention; brings about many advantages through its said characteristics.

The structural and characteristic features of the invention and all advantages will be understood better in detailed descriptions with the figures given below and with reference to the figures, and therefore, the assessment should be made taking into account the said figures and detailed explanations.

In order to achieve the above said purposes, the invention relates to drive shafts providing motion and power transmission in motor vehicles, and in order to extend the service life of the protective felt and at the same time the drive shaft; it comprises a protective metal sheet, which is positioned on the said drive shaft, and which externally protects the said protective felt.

### Figures for Better Understanding of the Invention

Figure-1 is the perspective view of the sliding set, which is the subject of the invention.
Figure-2 is the front sectional view of the protective piece, which is the subject of the invention, wherein it is used in the connection of sliding sets.
Figure-2a is the close plan front sectional detail view of the protective piece, which is the subject of the invention, wherein it is positioned on the felt.
Figure-3a is the perspective view of the protective structure, which is the subject of the invention, and the felt it protects.
Figure-3b is the front view of the invention, where it is mounted on the felt.

### Reference Numbers

- 10-: Yoke Shaft
- 20-: Protective Cover
- 30-: Tube Sleeve
- 40-: Protective metal sheet
- 41-: Engagement surface
- 42-: Radiused surfaces
- 50-: Protective felt
- 51-: Sealing (oil) Lip
- 52-: Dust lip
- 60-: Complete sliding set

### Detailed Description of the Invention

The invention relates to a protective metal sheet (40) for drive shafts providing motion and power transmission in motor vehicles and the protective metal sheet (40) is positioned on the sliding set of drive shaft, and which externally protects the said protective felt (50).

The invention comprises a protective metal sheet (40), which has an integral structure with the felt (50) to which the said protective felt (50) is bound via vulcanization operation, and which is positioned between the tube sleeve (30), an engagement surface (41), which provides mounting of the said protective metal sheet (40) to the protective cover (20) by press fit, and radiused surfaces (42), which are formed on the said protective metal sheet (40), have lower level than the engagement surface (41), in other words have a smaller internal diameter than the engagement surface (41), and are extensions of the engagement surface (41), and which scrape and remove away from the operating area mud, ice etc. substances which may possibly damage the felt lips hardened and became inflexible on the sliding set due to heavy operating conditions.

The invention relates to the protective metal sheet (40), which is found in the structure of most of the drive shafts used in vehicles, which provides protection of complete sliding set (60) components from dust, mud, water, shock etc. external factors while they operate inside each other, which extends the life of the protective felt (50) and thus the drive shaft, and which provides a better operating environment for the sliding set (60), and relates to the advantages it provides.

The felt body (50), dust lip (52), and sealing lip (51) protected by the said protective metal sheet (40) are; hidden inside the protective cover (20) and press fitted into the protective cover (20).

In Figure-1, the views of the protective cover (20) in connection with the yoke shaft (10) and the protective metal sheet adapted on the tube sleeve (30) are given.

Figure-2 shows the connection between the tube sleeve (30) and the protective cover (20) and the position of the protective metal sheet (40) on the felt (50) during this connection. Position of the protective metal sheet (40) is clearly shown in the detail figure.

Figure-3a shows the protective metal sheet (40), which enhances the functionality of the protective felt (50), extends its service life, is press-fitted into the inner part of the protective cover (20) as an engagement, and is preferably in the shape of metal ring made of high durability material.

Figure-3b shows the inwards sealing lip (51), found at the inner part of the standard component felt (50), designed to prevent entering of dust etc. undesired external factors into the sliding set, and designed to prevent leakage of the oil present at the operating medium to the outer environment via the inwards dust lip (52).

At the same time, it is also the view of the protective metal sheet (40), which is the subject of the invention, in a mounted position on the protective felt (50).

## Claims

1. A protective metal sheet (40) for drive shafts providing motion and power transmission in motor vehicles, the protective metal sheet comprising an engagement surface (41) for mounting of the protective metal sheet to a protective cover of the drive shaft by press fit, the protective metal sheet is arranged such that it externally protects the said protective felt (50), and has an integral structure with the felt (50) to which the said protective felt (50) is bound via vulcanization operation,
the protective metal sheet being **characterized in that**;
it comprises radiused surfaces (42), which are formed on the said protective metal sheet (40), have a smaller internal diameter than the engagement surface (41), and are extensions of the engagement surface (41).

## Patentansprüche

1. Metallschutzblech (40) für Antriebswellen, die Bewegungs- und Leistungsübertragung in Kraftfahrzeugen bereitstellen, wobei das Metallschutzblech eine Eingriffsfläche (41) zum Montieren des Metallschutzblechs an eine Schutzabdeckung der Antriebswelle mittels Presspassung umfasst, wobei das Metallschutzblech derart angeordnet ist, dass es den Schutzfilz (50) äußerlich schützt und eine integrale Struktur mit dem Filz (50) aufweist, an die der Schutzfilz (50) mittels eines Vulkanisierungsvorganges gebunden ist,
wobei das Metallschutzblech **dadurch gekennzeichnet ist, dass**
es gerundete Flächen (42) umfasst, die an dem Metallschutzblech (40) gebildet sind, die einen kleineren Durchmesser als die Eingriffsfläche (41) aufweisen und die Verlängerungen der Eingriffsfläche (41) sind.

## Revendications

1. Feuille de protection en métal (40) pour arbres de transmission offrant du mouvement et de la transmission de puissance dans des véhicules automobiles, la feuille de protection en métal comprenant une surface de mise en prise (41) pour le montage en force de la feuille de protection en métal sur un recouvrement de protection de l'arbre de transmission, la feuille de protection en métal étant disposée de telle sorte qu'elle protège extérieurement ledit feutre de protection (50) et a une structure d'un seul tenant avec le feutre (50) à laquelle ledit feutre de protection (50) est lié via une opération de vulcanisation,
la feuille de protection en métal **se caractérisant en ce qu'**elle comprend des surfaces arrondies (42) qui sont formées sur ladite feuille de protection en métal (40), ont un diamètre intérieur plus petit que la surface de mise en prise (41), et sont des extensions de la surface de mise en prise (41).
